# EUROPEAN PATENT SPECIFICATION

(11) **EP 0 342 833 B1**
(45) Date of publication and mention of the grant of the patent: **27.07.1994**
(21) Application number: 89304586.4
(22) Date of filing: 05.05.1989
(51) Int. Cl.: G11B 20/18

(54) **nigital data recording and/or reproduction apparatus and recording media**
Aufzeichnungs- und Wiedergabegerät für digitale Daten und Aufzeichnungsträger
Appareil d'enregistrement et de reproduction de données numériques et supports d'enregistrement

(30) Priority: 16.05.1988 JP 118567/88
(43) Date of publication of application: 23.11.1989
(73) Proprietor: SONY CORPORATION, Tokyo 141 (JP)
(72) Inventor: Sako, Yoichiro, Shinagawa-ku Tokyo 141 (JP); Ogawa, Hiroshi, Shinagawa-ku Tokyo 141 (JP)
(74) Representative: Pilch, Adam John Michael

(56) References cited:
- EP-A- 0 076 862
- EP-A- 0 155 101
- EP-A- 0 213 961
- ELECTRONICS & WIRELESS WORLD, vol. 91, no. 1591, May 1985, Sutton,GB; pages 27-28, J. R. WATKINSON: "Channel Code and Disc Format - 1"
- ELECTRONICS & WIRELESS WORLD, vol. 91, no. 1592, June 1985, Sutton,GB; pages 80 to 82; J. R. WATKINSON: "Channel Code amd Disc Format - 2"

## Description

This invention relates to digital data recording and/or reproduction apparatus, and to recording media on which digital data can be recorded.

A compact disc (CD) on which an audio signal is digitised and optically recorded is known. The standard compact disc comprises a recording medium having a diameter of 12 cm and which is capable of recording data having a capacity equal to or greater than about 500 megabytes, for example. As a result, this compact disc can be used as a digital data recording medium for recording a large quantity of data.

A compact disc read only memory (CD-ROM) has been standardised in which digital data other than audio data can be recorded in the audio recording area. In the CD-ROM, digital data is recorded in the same manner as in the audio compact disc. An optical disc with a diameter of 12 cm is utilised on which tracks are formed in a spiral fashion, as with the audio compact disc. The recording data is doubly encoded with CIRC (Cross Interleave Reed-Solomon Code), EFM-modulated (8-14 modulation) and optically recorded on the optical disc.

In such a CD-ROM, one sector (one block) that is a unit for data recording is composed of one subcode block of 98 frames. In the audio compact disc, an 8-bit subcode of P to W per frame (R to W are also called "users bits") is prepared. Since the subcode provides one information unit (address) with 98 frames, the 98 frames are called a "block".

The CD-ROM is a recording medium for read-out only. The CD-ROM has a large memory capacity, enables a large amount of copies and provides information with less deterioration. In view of these features, the CD-ROM is used, for example, for the recording of data of various kinds of dictionaries or data or research materials.

In recent years, an additional recording type optical recording medium has been developed for enabling erasure and rerecording, namely the optical magnetic disc. It has been proposed to use such an optical magnetic disc to record and reproduce digital data. Additional data can be recorded or rerecorded on such a compact disc (hereafter termed "CD-WO" for compact disc, write once) or the data can be erased and rerecorded (hereafter termed a "CD-erasable"). Thus its extensive application in various fields can be expected as compared with a CD-ROM which allows reproduction of prerecorded data only.

In the CD-WO or CD-erasable, it is useful if the writing/rewriting of data can be done in a unit of one sector. In contrast, the audio compact disc is for reproduction only and data is reproduced in the order of a time sequence.

In the audio compact disc, the data is sequential and an interleave of a maximum of 108 frames is used for the recording data. For this reason, when the CD-WO or CD-erasable is used in the same signal processing manner as the audio compact disc, complicated signal processing is needed in the case where the data is to be written into an arbitrary sector or where data of an arbitrary sector is rewritten. If the signal format of the CD-WO or CD-erasable is altered to be quite different from that of the audio compact disc, so as not to need such complicated processing, compatibility between the CD-ROM, CD-WO and CD-erasable is lost.

In the compact disc, a CIRC is used in which an interleave delay is made for symbols of each column on a two-dimensional data array including a developed and added parity of a C2 sequence using the Reed-Solomon code and in which a parity of a C1 sequence is developed and added using the Reed-Solomon code. In such a CIRC, an interleave of a maximum of 108 frames is applied and convolution encoding is effected so that an optimisation for sequential data such as audio data can be achieved. On the other hand, one sector is composed of a subcode block of 98 frames, which is a unit for data writing and read-out in a CD-WO or CD-erasable.

Consequently, when the rewriting of data of an arbitrary sector is done, its influence extends to two sectors before that sector and two sectors after that sector. That is, if the data of the arbitrary sector is rewritten, the parity of the C1 sequence relating to data of the two sectors before the sector and data of the two sectors after the sector tends to vary.

For this reason, in the case of the rewriting of data into an arbitrary sector, there is a need to take in data of that sector and two sectors lying after and before the sector respectively and to correct the data after obtaining the parity of the C1 sequence.

Therefore, as proposed in Japanese Patent Application No. 62-244 996, for instance, at least two continuous sectors with all -zeroes data are inserted between sectors for data recording, and it is proposed that only every third sector should be used as a sector for data recording, for example. Whereas with this scheme there is no need to obtain the parity of the adjacent sectors, the data recording capacity is eventually deteriorated to about 1/3 of the original capacity, in the worst case.

In accordance with an aspect of this invention there is provided digital data recording apparatus comprising encoding means for adding a predetermined error correction code to input data and means for recording the encoded data on to a recording medium, characterised in that the encoding means includes a memory for temporarily storing the input data, control address means for supplying a control address for the memory, the control address means being capable of selecting one of a first control address and a second control address, and interleave means for interleaving the input data in response to a control address supplied to the interleave means and wherein the first control address causes the interleave means to interleave input data to effect convolution encoding and the second control address causes the interleave means to interleave input data in a format allowing complete encoding in one sector of the input data.

A selection signal for selecting the manner of recording the data by the first control address or by the second control address is preferably recorded on the recording medium.

In accordance with another aspect of this invention there is provided digital data reproduction apparatus comprising means for reproducing and means for decoding data recorded on a recording medium by the recording apparatus set out above, characterised in that the decoding means includes a memory for temporarily storing the reproduced data, control address means for controlling an address for the memory, the control address means being capable of selecting a control address depending on whether the data reproduced from the recording medium is data recorded by the first control address or data recorded by the second control address, and deinterleave means responsive to the control address for deinterleaving the reproduced data, and wherein the first control address causes the deinterleave means to deinterleave the input data of which the convolution encoding has been effected and the second control address causes the deinterleave means to deinterleave the input data of which the complete encoding in one sector has been effected.

A decision on whether the reproduced data from the recording medium is data recorded by the first control address or data recorded by the second control address is preferably made by reproducing the selection signal recorded on the recording medium.

A preferred embodiment of this invention, to be described in greater detail hereinafter, provides a digital data recording/reproduction apparatus which does not need complicated processing in the recording of data into an arbitrary sector or in the rewriting of data of an arbitrary sector, and does not cause a decrease in the data recording capacity.

Also, since in the previously-proposed arrangement, a convolution code is used in this way, when data of an arbitrary sector is taken in, data of at least two sectors continuous to the arbitrary sector must be taken in, requiring an unduly long access time. However, the preferred embodiment of the invention provides a digital data recording/reproduction apparatus with a reduced access time compared to the previous proposals.

Recording/reproducing of digital data is carried out in the preferred embodiment using an optical disc with a configuration identical to a compact disc. At this time, first and second interleave processes can be set. In the first interleave process, the entire interleave length is made equal to 108 frames. The first interleave process is suited for the cases where sequential data such as audio data is handled and also the case where a complete compatibility with an audio compact disc or a CD-ROM should be established.

In the second interleave process, the entire interleave length is made equal to 95 frames, and an interleave is applied by the processing of a modulo 98 while circulating in 98 frames. With this system, error correction encoding is completed within one sector consisting of 98 frames. The second interleave process is suited for the case where there is a considerable need for writing data into an arbitrary sector or for rewriting data of an arbitrary sector, since the error correction encoding is completed within one sector.

In accordance with a further aspect of this invention there is provided a recording medium on to which digital data has been recorded, the recorded data being in the form of either convolution encoded input data or data which is completely encoded in one sector of input data, and a selection signal indicating whether the recorded data is in the form of the convolution encoded data or of the data completely encoded in the sector.

The invention will now be described by way of example with reference to the accompanying drawings, throughout which like parts are referred to by like references, and in which:
Figure 1 is a block circuit diagram of an embodiment of this invention;
Figures 2A and 2B are schematic diagrams for describing a recording format of an embodiment of the invention;
Figures 3 and 4 are schematic diagrams for describing the operation of an embodiment of the invention;
Figures 5A, 5B, 6A and 6B are block diagrams for describing a first interleave process;
Figures 7A, 7B and 8 are schematic diagrams for describing the first interleave process;
Figures 9A, 9B, 10A and 10B are block diagrams for describing a second interleave process;
Figures 11A, 11B and 12 are schematic diagrams for describing the second interleave process;
Figure 13 is a block diagram of one example of an encoding apparatus embodying the invention; and
Figure 14 is a block diagram of one example of a decoding apparatus embodying the invention.

An embodiment of this invention will now be described in the following order.
(a) Outline of a recording/reproduction apparatus.
(b) Frame structure and sector structure.
(c) Interleave processes.
(d) Encoding process and decoding process in the case of a first interleave process.
(e) Encoding process and decoding process in the case of a second interleave process.
(f) Encoding/decoding process in one embodiment.

### (a) Outline of a recording/reproduction apparatus

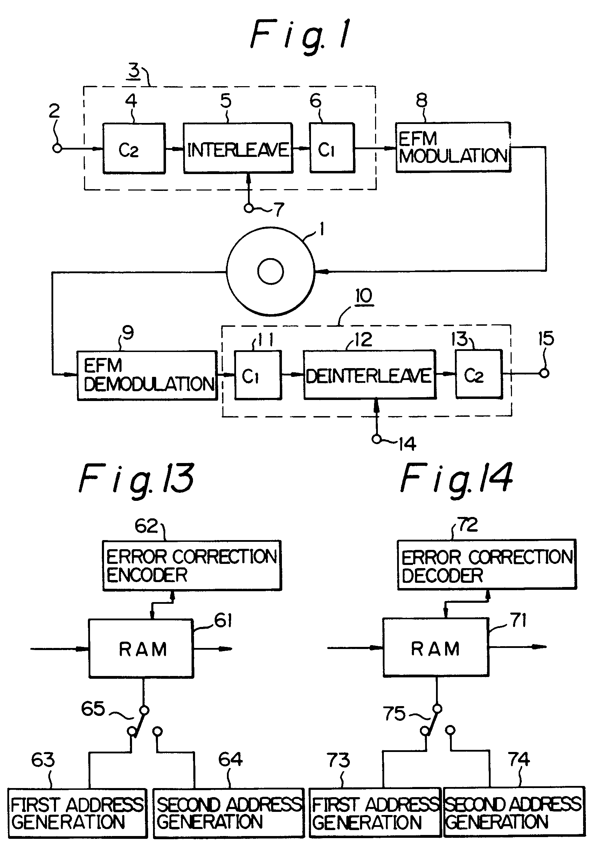

Figure 1 shows a block diagram of a recording/reproducing apparatus. In Figure 1, there is shown an optical disc 1 on which digital data is optically recorded and/or reproduced. Instead of the optical disc 1, an additional recording type optical disc or an optical disc in which erasure and recording are possible such as an optical magnetic disc can be used. The optical disc 1 has a similar form to that of an audio compact disc. Typically, the diameter of the optical disc 1 is 12 cm, and tracks of a spiral shape are formed in the optical disc 1. The optical disc 1 is rotated with a constant line velocity (CLV).

At the time of recording, data to be recorded on the optical disc 1 is supplied to a data input terminal 2. The recording data is supplied to an encoding circuit 3. The encoding circuit 3 is composed of a C2 encoder 4, an interleave delay circuit 5 and a C1 encoder 6. Data from the input terminal 2 is developed in a predetermined frame construction and doubly encoded for a C1 sequence and a C2 sequence at the encoder 3. A selection signal is supplied from a terminal 7 to the interleave delay circuit 5. As will be mentioned later, a first interleave process and a second interleave process which are different in interleave length are applied by the interleave delay circuit 5. In the case of the first interleave process, an interleave of a maximum of 108 frames is applied. Further, in the case of the first interleave process, convolution encoding is effected. In the case of the second interleave process, the length of its interleave is 98 frames, and in the second interleave process, error correction encoding is completed in one sector.

Data with error correction codes doubly added at the encoding circuit 3 is subjected to EFM modulation (8-14 modulation) at an EFM modulator 8, and is then recorded on to the optical disc 1.

In the reproduction of data recorded on the optical disc 1, the above processes are performed in the reverse sequence. The reproduced data from the optical disc 1 is supplied to an EFM demodulator 9 in which it is EFM demodulated. The output of the EFM demodulator 9 is fed to a decoding circuit 10. The decoding circuit 10 is made up of a C1 decoder 11, a deinterleave delay circuit 12, and a C2 decoder 13. The deinterleave delay circuit 12 can perform a first and a second deinterleave process each corresponding to the two interleave processes that can be selected at the interleave delay circuit 5. A selection signal is supplied to the deinterleave delay circuit 12 from a terminal 14. The selection signal enables switching between the two deinterleave processes.

At the time of recording, data representing which of the first and second interleave processes has been done can be written into a part of the optical disc 1, for example, in a table of contents (TOC) of the innermost circumference of the disc, and at the time of reproduction, the deinterleave delay circuit 12 can be switched depending on the data.

In addition, it is possible to record a signal of the first interleave process and a signal of the second interleave process in their mixed way. More specifically, with the provision of a data area in which predetermined data is recorded and a user's area in which a user can write freely in the optical disc 1, for example, a signal can be recorded in the area for recording the predetermined data in the first interleave process and a signal can be recorded in the user's area in the second interleave process. In this case, the data area enables a large number of copies to be made using a stamper as in the CD-ROM.

The output of the decoding circuit 10 is connected to an output terminal 15, and therefore reproduced data is provided from the output terminal 15.

### (b) Frame structure and sector structure

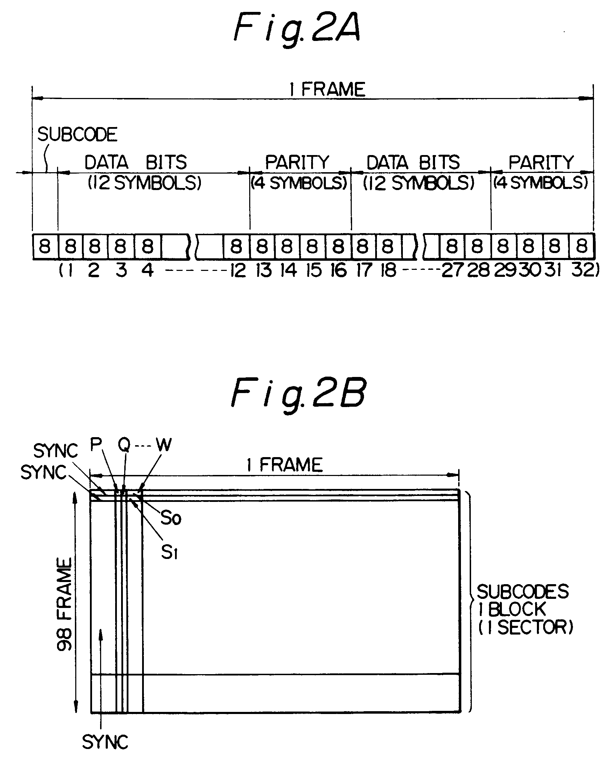

In the optical disc 1, data is developed into a frame structure and recorded with EFM modulation as shown in Figure 2A. The frame structure is the same as in the audio compact disc. More specifically, as shown in Figure 2A, one frame comprises data bits of 24 symbols corresponding to each six samples of L (left) and R (right) in the case of 16-bit sampling for audio data (one symbol is eight bits, EFM-modulated 14-channel bits), an 8-symbol parity, one symbol subcode, a 24-channel-bit frame sync (not shown), and margin bits (not shown) for suppressing a direct current component.

Consequently, the total channel bit numbers of one frame is:

| | |
|---|---|
| Frame sync | 24-channel bits |
| Data bits | 14 x 24 = 336-channel bits |
| Subcode | 14-channel bits |
| Parity | 14 x 8 = 112-channel bits |
| Margin bits | 3 x 34 = 102-channel bits |
| Total | 558-channel bits |

One-symbol subcodes of each frame are present for eight channels ranging from P to W. As shown in Figure 2B, one subcode block is composed of 98 subcodes assembled from the eight channels P to W of each frame. The subcode block is called "one sector". As a result, one sector corresponds to 98 frames. Two patterns which are not present in 256 patterns at the time of EFM modulation of data are selected as subcode frame sync S0, S1.

The P channel among these subcodes P to W is used as a flag indicative of a head. The Q channel is used as a control bit. A data/audio flag, an address, a track number, a time code, and the like are recorded in the Q channel.

### (c) The interleave processes

As has been described above, in one embodiment of the invention, data is recorded with the addition of double error correction codes for the C1 sequence and the C2 sequence. In such encoding, either a first or a second interleave process can be selected.

In the first interleave process, an interleave of a maximum of 108 frames is applied. In this case, convolution encoding is effected together with continuous frames. This first interleave process is a process similar to that for an audio compact disc or a CD-ROM. Therefore, such a process is suitable for handling sequential data such as audio data and for maintaining full compatibility with an audio compact disc or a CD-ROM.

In the second interleave process, an interleave of a maximum of 95 frames is applied. The interleave is applied by the processing of a modulo 98 while circulating in 98 frames. With this process, error correction encoding is accomplished in one sector consisting of 98 frames. The second interleave process is suited for use in the case where there is a need for the writing of data in an arbitrary sector or for the rewriting of data of an arbitrary sector, since the error correction encoding is finished in one sector.

It is to be noted that the basic encoding process and decoding process are similar in the first interleave process and the second interleave process. More specifically, data is arranged in a two-dimensional fashion, the parity Q is added by a (28, 24, 5) Reed-Solomon code, and the encoding of the C2 sequence is performed. Further, an interleave is applied, the parity P is added by a (32, 28, 5) Reed-Solomon code, and the encoding of the C2 sequence is performed.

In the case of the first interleave process, an interleave of a maximum of 108 frames is applied and the convolution encoding is effected. For this reason, when data recording or rewriting is performed in an arbitrary sector, the processing becomes complicated.

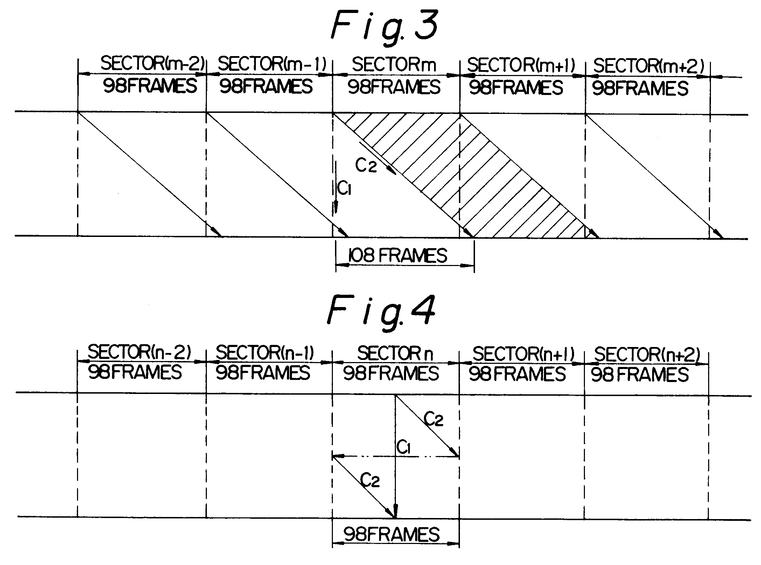

That is, when the first interleave process is carried out, the interleave of a maximum of 108 frames is executed and the convolution encoding is effected together with data of the continuous frames as indicated in the diagram of Figure 3. In Figure 3, data of a sector m is disposed, as indicated by the oblique shading lines in Figure 3, by the interleave of a maximum of 108 frames, for example. When the data of the sector m in the area indicated by the oblique lines is rewritten, this affects all the C1 sequence of the next following sector (m + 1), and the C1 sequence of a part of the second following sector (m + 2), and further affects all the C1 sequence of the preceding sector (m - 1) and the C1 sequence of a part of the sector (m - 2). Consequently, when the data of the sector m is rewritten, the parities of the C1 sequences of the sectors (m + 1), (m + 2), (m - 1), and (m - 2) must be corrected correspondingly.

On the other hand, in the second interleave process, the length of an interleave is selected to be 95 frames less than the frame number of one sector, and the interleave is applied while circulating with a modulo 98. As a result, as shown in the diagram of Figure 4, error correction encoding is completed in one sector. Therefore, if rewriting of a sector n is effected, for instance, this does not affect the sectors (n + 1), (n + 2), (n - 1), or (n - 2) at all.

### (d) Encoding and decoding processes in the case of a first interleave process

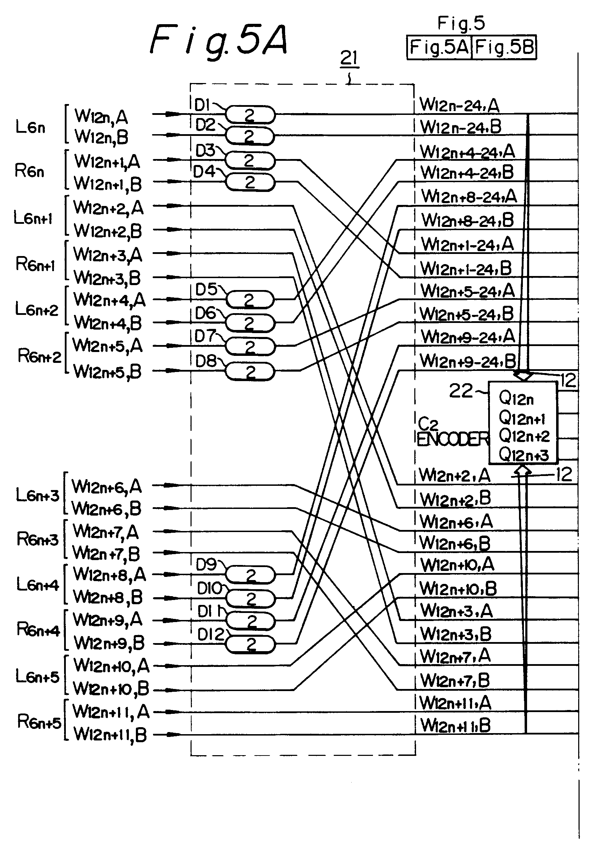

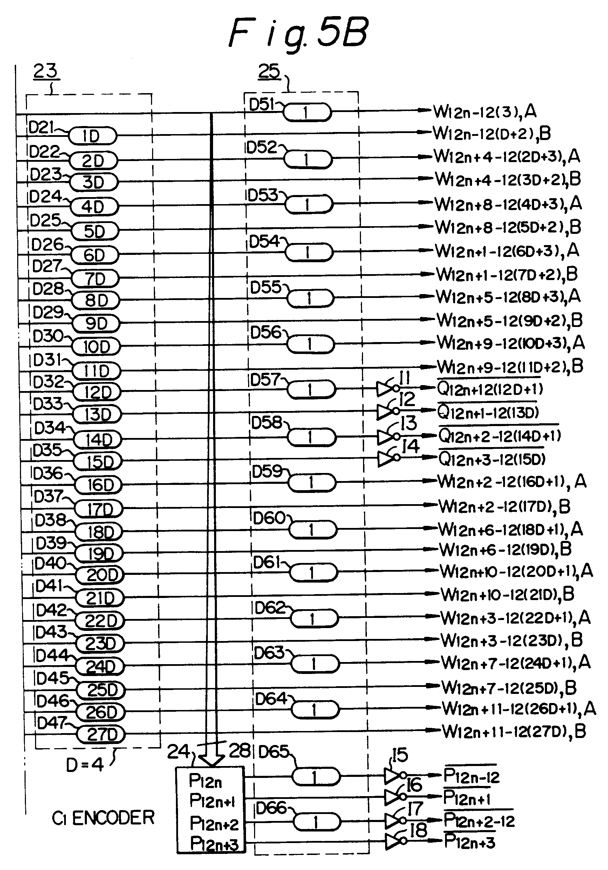

An encoding process in the case of data encoding in the first interleave process will now be explained, referring to Figures 5A and 5B.

Twelve items of sixteen-bit data to be recorded, that is, L6n, R6n, L6n+1, R6n+1, ....., L6n+5, R6n+5 are sent to a delay block 21 after being divided into data of upper eight bits and lower eight bits, that is, W12n,A, W12n,B, ....., W12n+11,A, W12n+11,B. The upper eight bits are indicated by A, while the lower eight bits are indicated by B.

A two-frame delay is given to data of an even number, i.e. L6n, R6n, L6n+2, R6n+2, ..... by delay elements D1 to D12 at a delay block 21. Simultaneously, a rearrangement of the data is performed at the delay block 21.

Twenty-four symbols produced from the delay block 21 are sent to a C2 decoder 22. A four-symbol parity Q12n, Q12n+1, ....., Q12n+3 is developed by the (28, 24, 5) Reed-Solomon code at the C2 decoder 22.

The four-symbol parity Q12n, Q12n+1, ....., Q12n+3 developed at the C2 decoder 22 is added to the centre of the output data of 24 symbols of the delay block 21 to provide 28 symbols.

The 28 symbols are sent to a delay block 23. An interleave of frames of a multiple of 4 is made for each of the 28 symbols by delay elements D21 to D47 of the delay block 23.

Twenty-eight symbols produced from the delay block 23 are sent to a C1 encoder 24. A four-symbol parity P12n, P12n+1, ....., P12n+3 is developed by the (32, 28, 5) Reed-Solomon code at the C1 encoder 24.

The four-symbol parity P12n, P12n+1, ....., P12n+3 is added to the last of the 28 symbols output from the delay block 23 to provide 32 symbols.

The 32 symbols are sent to a delay block 25. Each of the 32 symbols is delayed by one frame by delay elements D51 to D66 of the delay block 25.

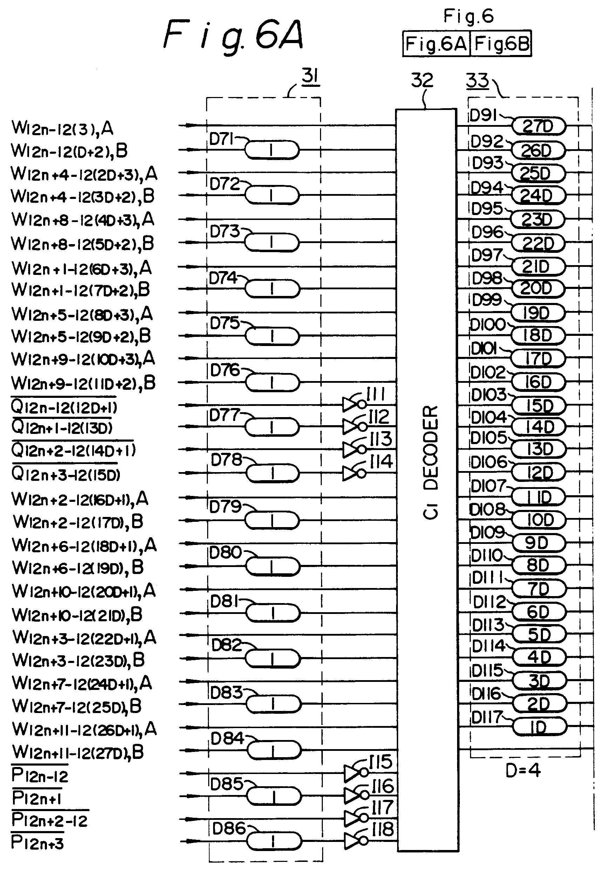

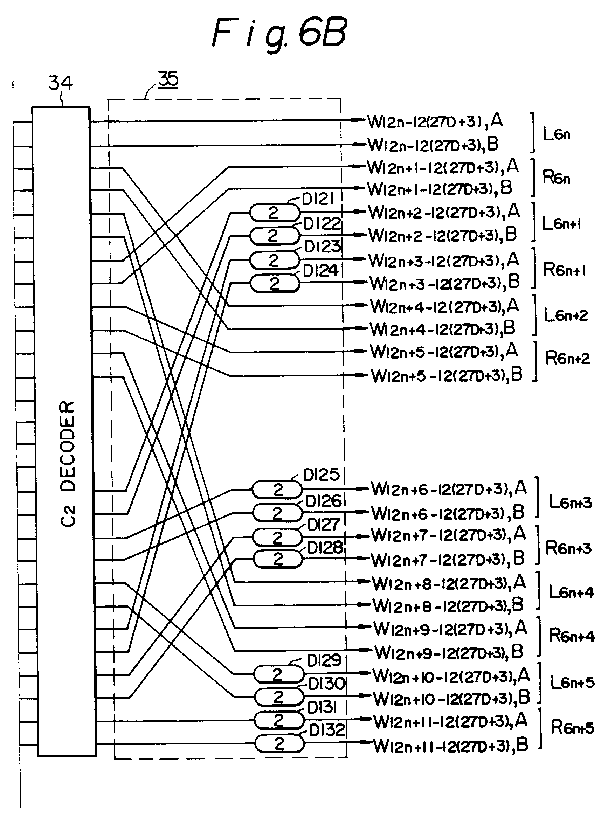

The parity symbols are inverted by inverters I1 to I4 and I5 to I8 to complete the encoding process. The decoding process is carried out in a manner opposite to the above-mentioned encoding process. The decoding process will be described referring to Figures 6A and 6B.

The reproduced 32 symbols (four-symbol parity P and four-symbol parity Q added to 24 data symbols) are sent to a delay block 31. Each symbol is delayed by one frame by delay elements D71 to D86 of the delay block 31. The parity symbols are inverted by inverters I11 to I18. The 32 symbols are sent to a C1 decoder 32.

Twenty-eight symbols produced from the C1 decoder 32 are sent to a delay block 33. The interleave of frames of a multiple of 4 is released by delay elements D91 to D116 of the delay block 33. The output of the delay block 33 is sent to a C2 decoder 34.

Error correction processing is performed at the C1 decoder 32 and the C2 decoder 34. Twenty-four symbols produced from the C2 decoder 34 are sent to a delay block 35. The data is returned to the order of a time sequence at the delay block 35. Data of an odd number is delayed by two frames by delay elements D121 to D132, and the decoding process is complete.

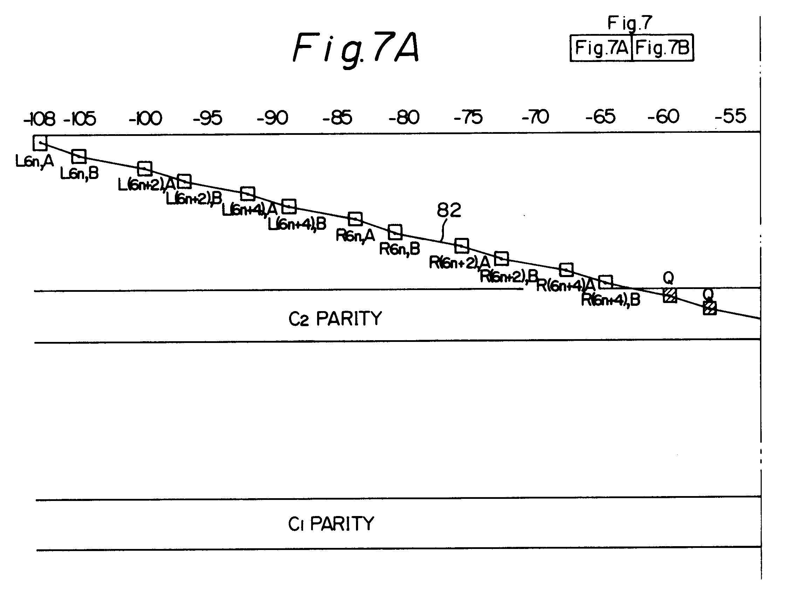

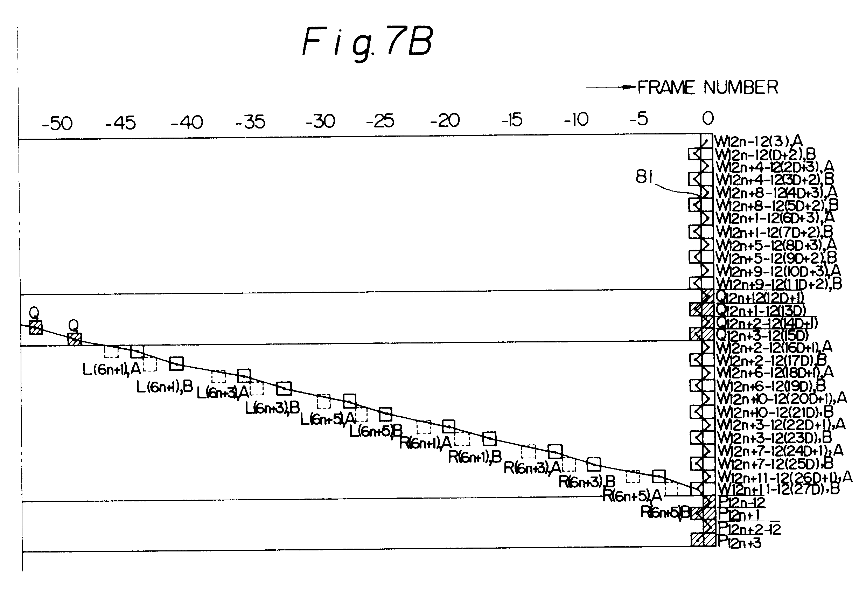

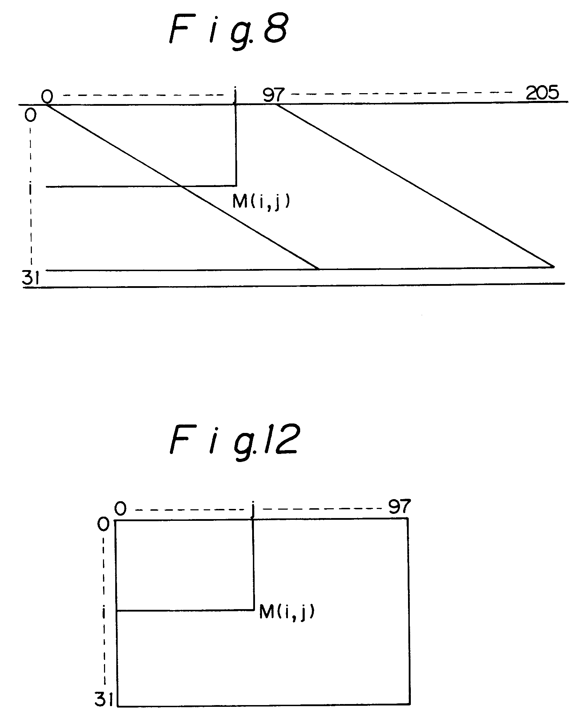

When each symbol in the encoding based on the first interleave process is mapped on a two-dimensional array, it is as shown in Figures 7A and 7B. In the case of the first interleave process, the interleave of a maximum of 108 frames is applied. As a result, the coordinates of one sector corresponding to symbols in the time sequence order are as indicated in Table 1. Here, as shown in Figure 8, M (i, j) indicates a row number i and a column number j at which a symbol is disposed.

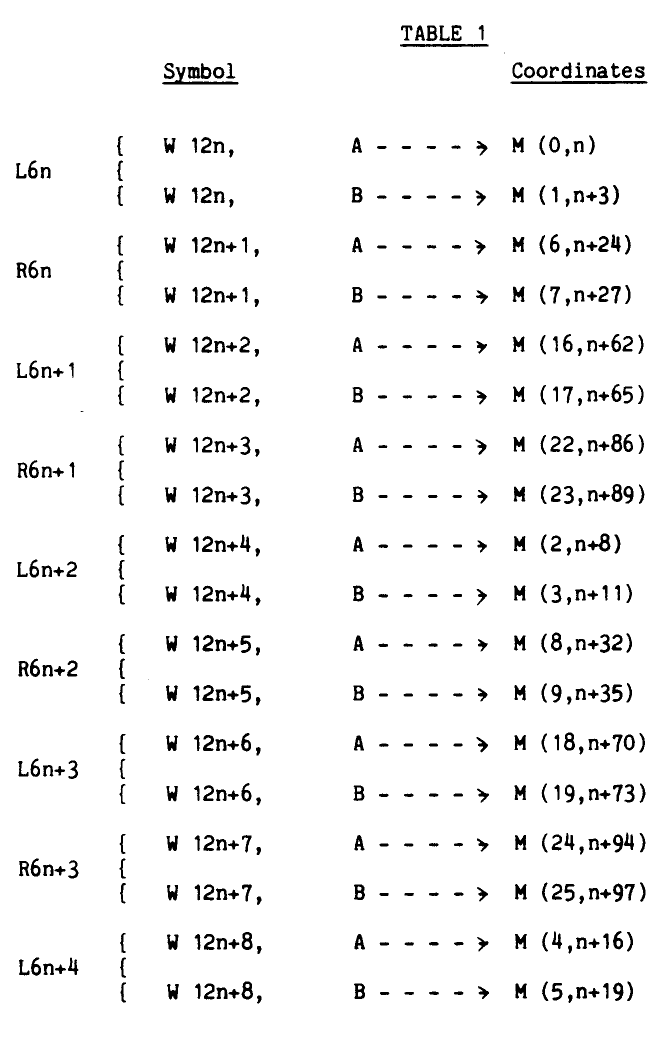

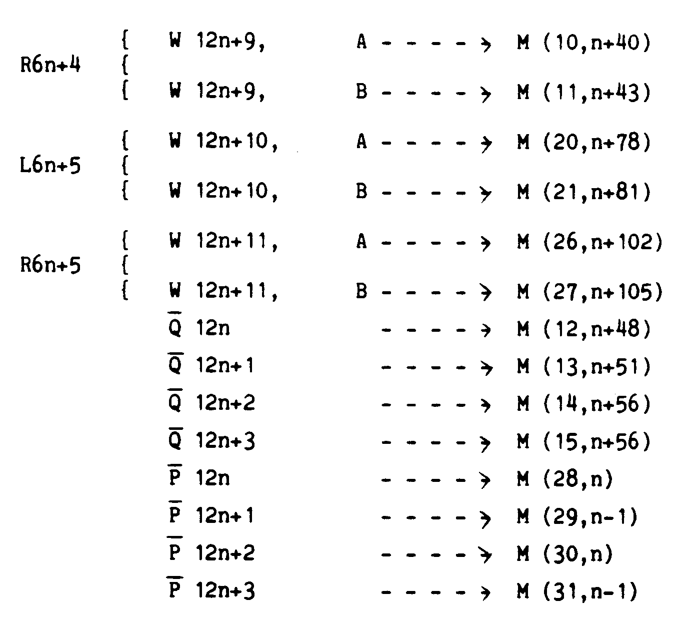

In the case where each symbol is arranged in a two-dimensional fashion as shown in Figures 7A and 7B, the interleave is released and data can be decoded by the read-out/write-in in the column direction through the address manipulation corresponding to the decoding process shown in Figures 6A and 6B.

Specifically, the decoding of the C1 sequence can be achieved as indicated by a line 81 (Figure 7B) by delaying symbols in the row of an even number corresponding to the delay block 31 by one frame and reading out data in the column direction.

The decoding of the C2 sequence can be made next as indicated by a line 82 (Figure 7A) by a delay of (27 x 4 =) 108 frames with respect to the first row, a delay of (26 x 4 =) 104 frames with respect to the second row, a delay of (25 x 4 =) 100 frames with respect to the third row corresponding to the delay block 33, and by read-out.

It is to be noted that, since data of an odd number is delayed by two frames corresponding to the delay block 35, the data of an odd number shown at the broken line squares (Figure 7B) are output at the time of decoding.

### (e) Encoding and decoding processes in the case of a second interleave process.

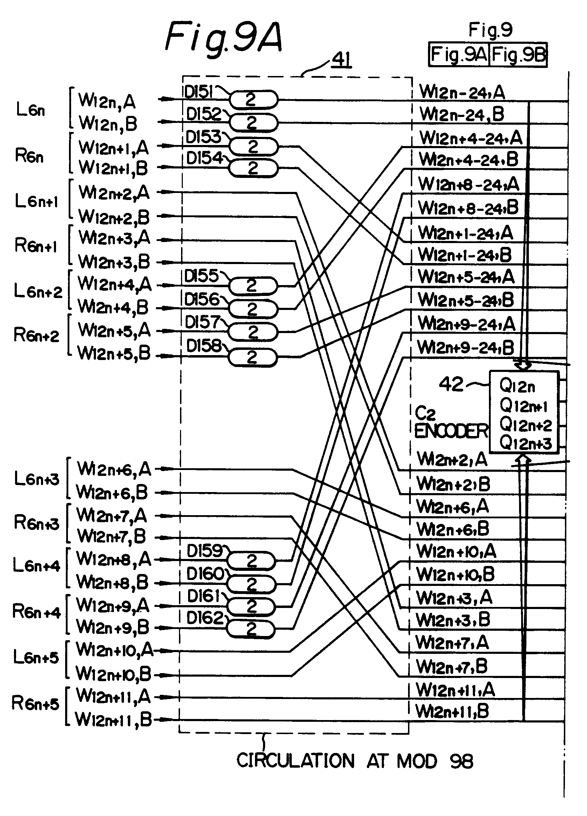

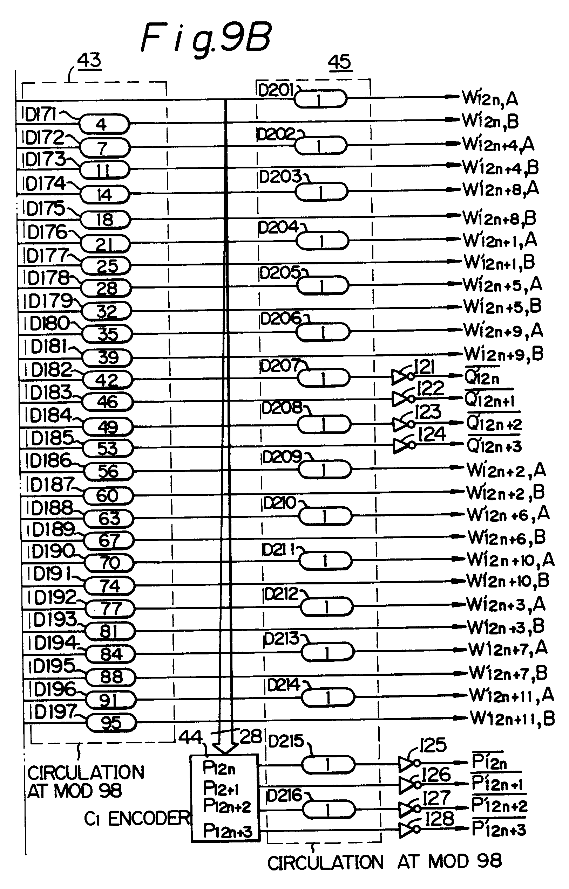

An encoding process in the case of data encoding in the second interleave process will now be explained referring to Figures 9A and 9B.

Twelve items of sixteen-bit data L6n, R6n, L6n+1, R6n+1, ....., L6n+5, R6n+5 are supplied to a delay block 41 after being divided into data of upper eight bits and lower eight bits, that is, W12n,A, W12n,B, ....., W12n+11,A, W12n+11,B.

A two-frame delay is given to data of an even number, i.e., L6n, R6n, L6n+2, R6n+2, ..... by delay elements D151 to D162 at the delay block 41 (the delay block 41 circulates with a modulo 98). Simultaneously, the rearrangement of data is done at the delay block 41.

Twenty-four symbols produced from the delay block 41 are sent to a C2 decoder 42. A four-symbol parity Q12n, Q12n+1, ....., Q12n+3 is developed by the Reed-Solomon code (28, 24, 5) at the C2 decoder 42.

The four-symbol parity Q12n, Q12n+1, ....., Q12n+3 developed at the C2 decoder 42 is added to the centre of the 24-symbol output data of a delay block 42 to provide 28 symbols.

The 28 symbols are sent to a delay block 43. An interleave of four frames, three frames, four frames, three frames, ..... (etc) is applied by delay elements D171 to D197 of the delay block 43 (the delay block 43 circulates with a modulo 98).

Twenty-eight symbols produced from the delay block 43 are sent to a C1 encoder 44. A four-symbol parity P12n, P12n+1, ....., P12n+3 is developed by the (32, 28, 5) Reed-Solomon code at the C1 encoder 44.

The four-symbol parity P12n, P12n+1, ....., P12n+3 is added to the last of 28 symbols produced from the delay block 43 to provide 32 symbols.

The 32 symbols are sent to a delay block 45. Each of the 32 symbols is delayed by one frame by delay elements D201 to D216 of the delay block 45 (the delay block 45 circulates with a modulo 98).

The parity symbols are inverted by inverters I21 to I24 and I25 to I28 to complete the encoding process.

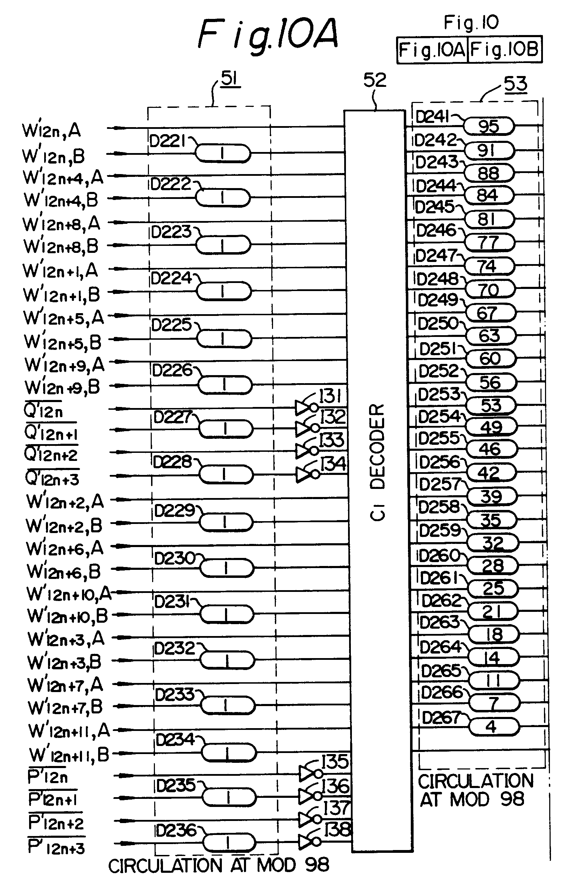

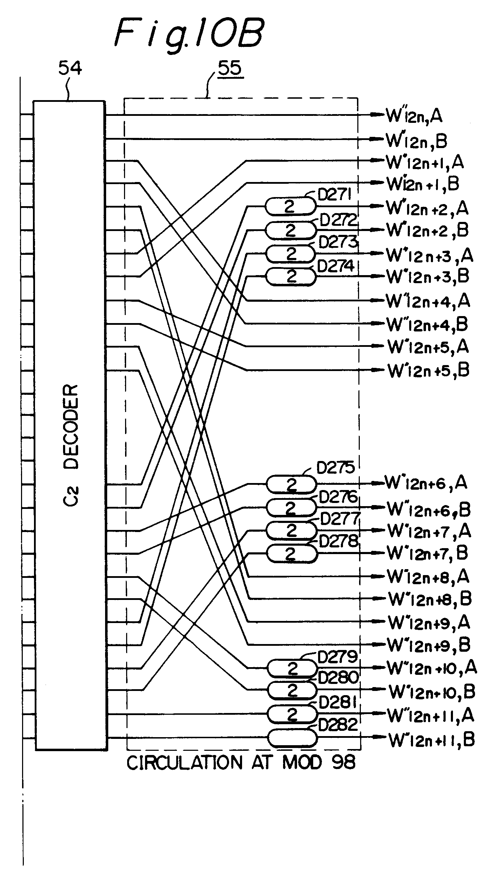

An explanation of the decoding process will be given by referring to Figures 10A and 10B. The reproduced 32 symbols are sent to a delay block 51. Every symbol is delayed by one frame by delay elements D221 to D236 of the delay block 51 (the delay block 51 circulates with a modulo 98). The parity symbols reproduced by inverters I31 to I38 are inverted. The 32 symbols are supplied to a C1 decoder 52.

Twenty-eight symbols produced from the C1 decoder 52 are sent to a delay block 53. The interleave of the four frames, three frames, four frames, three frames, ..... (etc) is released by delay elements D241 to D267 of the delay block 53 (the delay block 53 circulates with a modulo 98). The output of the delay block 53 is fed to a C2 decoder 54.

Error correction processing is effected at the C1 decoder 52 and the C2 decoder 54. Twenty-four symbols produced from the C2 decoder 54 are sent to a delay block 55. Data is returned to the order of a time sequence at the delay block 55. Delay elements D271 to D282 of the delay block 55 cause data of an even number to be delayed by two frames to finish the decoding process (the delay block 55 circulates with a modulo 98).

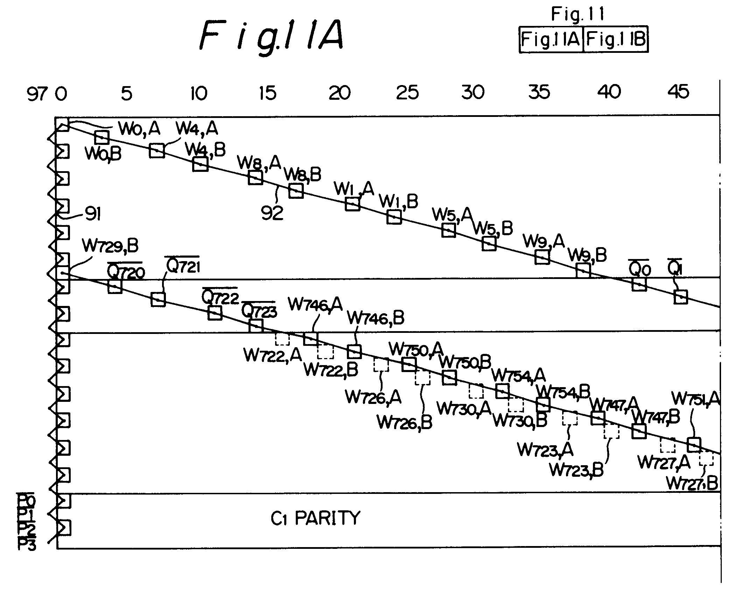

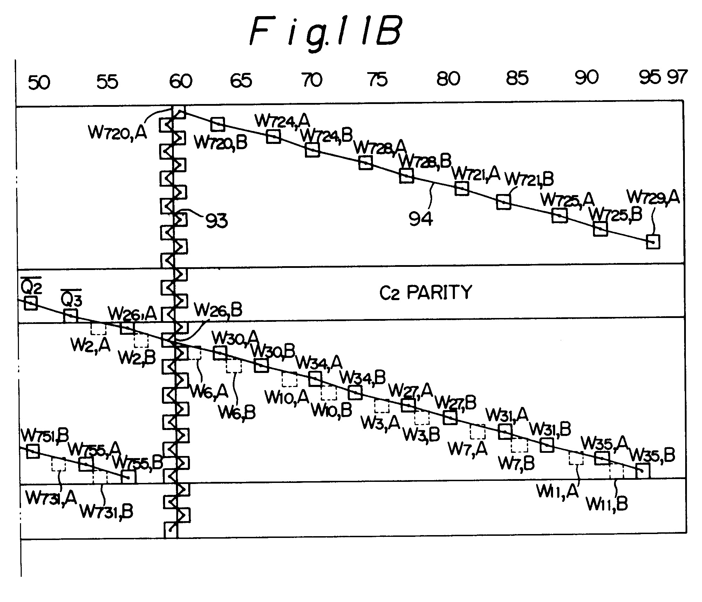

When each symbol in the encoding based on the second interleave process is mapped on a two-dimensional array, it is as shown in Figures 11A and 11B. In the case of the second interleave process, the interleave of a maximum of 95 frames is applied. By taking a modulo 98, the state returns to the 0 frame after the frame of the 97-th column is delayed. As a result, the coordinates M (i, j) of symbols of one sector corresponding to the symbols W12n,A, W12n,B, W12n+1,A, W12n+1,B, ..... of the time sequence order become as indicated in Table 2. M (i, j) indicates the coordinates of each symbol as shown in Figure 12, where i represents a row number, j represents a column number, and n = 0 to 97.

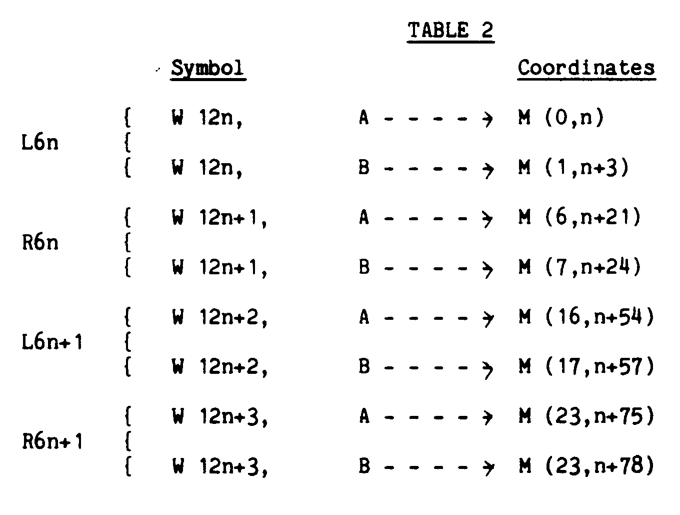

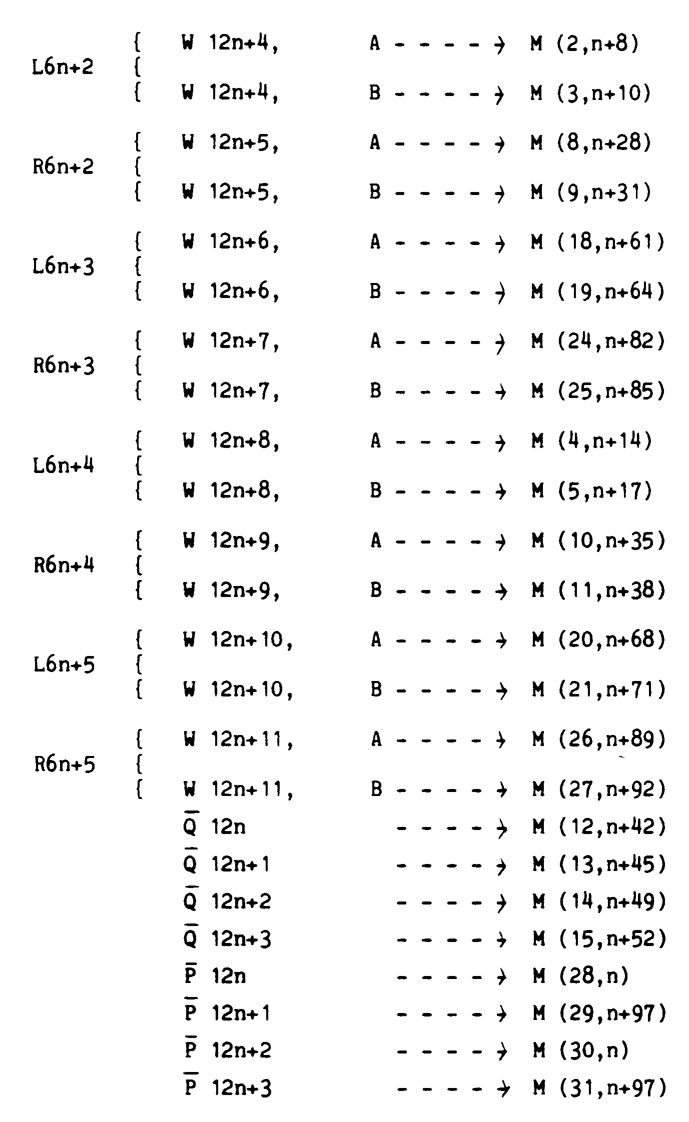

In the case where each symbol is arranged in a two-dimensional fashion as shown in Figures 11A and 11B, the interleave is released and data can be decoded by the read-out/write-in in the column direction through the address manipulation corresponding to the decoding process shown in Figures 10A and 10B.

Specifically, the decoding of the C1 sequence can be achieved by delaying symbols in the row of an even number corresponding to the delay block 51 by one frame and reading out data in the column direction. In this case, a modulo 98 is taken.

Then, the decoding of the C2 sequence can be effected by a delay of 95 frames with respect to the first row, a delay of 91 frames with respect to the second row, a delay of 88 frames with respect to the third row, ..... (etc.) corresponding to the delay block 53 and by read-out. At this time, a modulo 98 is taken.

In Figures 11A and 11B, the decoding process at the time of n = 0 and that at the time of n = 60 are shown. In the case of n = 0, the C1 sequence is decoded as indicated at a line 91. In this case, a modulo 98 is taken, and, as a result, the C1 sequence is decoded based on symbols of the frame in the 0-th column and the frame in the 97-th column. Also, in the case of n = 0, the C2 sequence is decoded as indicated by a line 92 (Figure 11A).

In the case of n = 60, the C1 sequence is decoded as indicated by a line 93 (Figure 11B). Further, in the case of n = 60, the C2 sequence is decoded as indicated by a line 94 (Figure 11B). At this time, since a modulo 98 is taken, the symbol W729,B to be delayed by 38 frames from 60 frames returns to the position of M (11,0). The same applies to the subsequent symbols.

### (f) Encoding/decoding process in one embodiment

The above-mentioned encoding process and decoding process are achieved by storing data into a random access memory (RAM) and controlling the address.

Specifically, the encoding circuit 3 shown in Figure 1 enables the selection of the encoding process in the case of the above-mentioned first and second interleave processes. As shown in Figure 13, the encoding circuit 3 is composed of a RAM 61, an error correction encoder 62, a first address generator 63 for generating an address corresponding to the first interleave process, and a second address generator 64 for generating an address corresponding to the second interleave process. By selectively supplying the address corresponding to the first interleave process produced from the first address generator 63 and the address corresponding to the second interleave process produced from the second address generator 64 to the RAM 61 through switch means 65, the selection of either the encoding process of the first interleave process or of the second interleave process can be made.

Additionally, the decoding circuit 10 shown in Figure 1 enables the selection of the decoding process in the case of the above-mentioned first or second interleave processes. As shown in Figure 14, the decoding circuit 10 is made up of a RAM 71, an error correction decoder 72, a first address generator 73 for generating an address corresponding to the first interleave process and a second address generator 74 for generating an address corresponding to the second interleave process. By selectively supplying the address corresponding to the first interleave process produced from the first address generator 73 and the address corresponding to the second interleave process produced from the second address generator 74 to the RAM 71 through switch means 75, the selection of either the decoding process of the first interleave process or of the second interleave process can be made.

According to the above-described technique, an interleave process can be selected so that error correction encoding can be completed in one sector consisting of 98 frames. When data is written into an arbitrary sector or data of an arbitrary sector is rewritten, its influence does not extend to other sectors since the error correction encoding can be accomplished in one sector. Further, in the rewriting of the data of the arbitrary sector, no complicated signal processing is needed and no degradation of the data recording capacity takes place.

In addition, since the error correction encoding is finished in one sector, there is no need to take in data of plural sectors at the time of data read-out/write-in, thereby enabling a faster access time.

## Claims

1. Digital data recording apparatus comprising encoding means (3) for adding a predetermined error correction code to input data and means for recording the encoded data on to a recording medium (1), characterised in that the encoding means (3) includes a memory (61) for temporarily storing the input data, control address means (63 to 65) for supplying a control address for the memory (61), the control address means (63 to 65) being capable of selecting one of a first control address and a second control address, and interleave means (5) for interleaving the input data in response to a control address supplied to the interleave means (5) and wherein the first control address causes the interleave means (5) to interleave input data to effect convolution encoding and the second control address causes the interleave means (5) to interleave input data in a format allowing complete encoding in one sector of the input data.

2. Digital data recording apparatus according to claim 1, wherein the first or second control address is recorded on to the recording medium (1).

3. Digital data recording apparatus according to claim 1 or claim 2, wherein the sector is composed of 98 frames.

4. Digital data reproduction apparatus comprising means for reproducing and means (10) for decoding data recorded on a recording medium (1) by the recording apparatus according to claim 1, claim 2 or claim 3, characterised in that the decoding means (10) includes a memory (71) for temporarily storing the reproduced data, control address means (73 to 75) for controlling an address for the memory (71), the control address means (73 to 75) being capable of selecting a control address depending on whether the data reproduced from the recording medium (1) is data recorded by the first control address or data recorded by the second control address, and deinterleave means (12) responsive to the control address for deinterleaving the reproduced data, and wherein the first control address causes the deinterleave means (12) to deinterleave the input data of which the convolution encoding has been effected and the second control address causes the deinterleave means (12) to deinterleave the input data of which the complete encoding in one sector has been effected.

5. Digital data reproduction apparatus according to claim 4, comprising means supplied with the reproduced data for detecting whether it is data encoded in accordance with the first control address or the second control address by reproducing the control address recorded on the recording medium (1) indicating whether convolution encoding of the data has been effected or complete encoding of the data in a sector has been effected.

6. A recording medium (1) on to which digital data has been recorded, the recorded data being in the form of either convolution encoded input data or data which is completely encoded in one sector of input data, and a selection signal indicating whether the recorded data is in the form of the convolution encoded data or of the data completely encoded in the sector.

7. A recording medium (1) according to claim 6, wherein the sector is composed of 98 frames.

## Patentansprüche

1. Vorrichtung zur Aufzeichnung digitaler Daten, mit einer Codiereinrichtung (3) zum Ergänzen von Eingangsdaten durch einen vorbestimmten Fehlerkorrekturcode und mit einer Einrichtung zum Aufzeichnen der codierten Daten auf einem Aufzeichnungsmedium(1),
**dadurch gekennzeichnet,**
daß die Codiereinrichtung (3) einen Speicher (61) zur Zwischenspeicherung der Eingangsdaten, eine Steueradresseneinrichtung (63 bis 65), die dem Speicher (61) eine Steueradresse liefert und geeignet ist, die Auswahl zwischen einer ersten Steueradresse und einer zweiten Steueradresse zu treffen, sowie eine Verflechtungseinrichtung (5) zur Verflechtung der Eingangsdaten in Reaktion auf eine der Verflechtungseinrichtung (5) zugeführte Steueradresse enthält, wobei die Verflechtungseinrichtung (5) die Eingangsdaten aufgrund der ersten Steueradresse so verflicht, daß es zu einer Faltungscodierung kommt, während die Verflechtungseinrichtung (5) die Eingangsdaten aufgrund der zweiten Steueradresse in einem Format verflicht, das die vollständige Codierung innerhalb eines Sektors der Eingangsdaten ermöglicht.

2. Vorrichtung zur Aufzeichnung digitaler Daten nach Anspruch 1, wobei die erste oder zweite Steueradresse auf dem Aufzeichnungsmedium (1) aufgezeichnet wird.

3. Vorrichtung zur Aufzeichnung digitaler Daten nach Anspruch 1 oder Anspruch 2, wobei der Sektor aus 98 Rahmen besteht.

4. Vorrichtung zur Wiedergabe digitaler Daten, mit einer Einrichtung zur Wiedergabe und einer Einrichtung (10) zur Decodierung von Daten, die durch die Aufzeichnungsvorrichtung nach Anspruch 1, Anspruch 2 oder Anspruch 3 auf einem Aufzeichnungsmedium (1) aufgezeichnet wurden,
**dadurch gekennzeichnet,**
daß die Decodiereinrichtung (10) einen Speicher (71) zur Zwischenspeicherung der wiedergegebenen Daten, eine Steueradresseneinrichtung (73 bis 75), die eine Adresse für den Speicher (71) steuert und geeignet ist, eine Steueradresse in Abhängigkeit davon auszuwählen, ob die vom Aufzeichnungsmedium (1) wiedergegebenen Daten mit der ersten oder mit der zweiten Steueradresse aufgezeichnet wurden, sowie eine Entflechtungseinrichtung (12) zur Entflechtung der wiedergegebenen Daten in Reaktion auf die Steueradresse enthält, wobei die Entflechtungseinrichtung (12) aufgrund der ersten Steueradresse diejenigen Eingangsdaten entflicht, die einer Faltungscodierung unterzogen wurden, während die Entflechtungseinrichtung (12) aufgrund der zweiten Steueradresse diejenigen Eingangsdaten entflicht, die vollständig innerhalb eines Sektors codiert wurden.

5. Vorrichtung zur Wiedergabe digitaler Daten nach Anspruch 4, mit einer Einrichtung, der die wiedergegebenen Daten zugeführt werden und die erfaßt, ob es sich um Daten handelt, die gemäß der ersten oder gemäß der zweiten Steueradresse codiert wurden, indem sie die auf dem Aufzeichnungsmedium (1) aufgezeichnete Steueradresse wiedergibt, die anzeigt, ob eine Faltungscodierung der Daten oder eine vollständige Codierung der Daten innerhalb eines Sektors durchgeführt wurde.

6. Aufzeichnungsmedium (1), auf dem digitale Daten aufgezeichnet sind, wobei die aufgezeichneten Daten entweder die Form faltungscodierter Eingangsdaten oder vollständig innerhalb eines Sektors der Eingangsdaten codierter Daten haben, und wobei ein Auswahlsignal anzeigt, ob die aufgezeichneten Daten die Form faltungscodierter Daten oder vollständig innerhalb eines Sektors codierter Daten haben.

7. Aufzeichnungsmedium (1) nach Anspruch 6, wobei der Sektor aus 98 Rahmen besteht.

## Revendications

1. Appareil d'enregistrement de données numériques comprenant un moyen de codage (3) pour additionner un code de correction d'erreur prédéterminé à des données d'entrée et un moyen pour enregistrer des données codées sur un support d'enregistrement (1), caractérisé en ce que le moyen de codage (3) inclut une mémoire (61) pour stocker temporairement les données d'entrée, un moyen d'adresse de commande (63 à 65) pour appliquer une adresse de commande pour la mémoire (61), le moyen d'adresse de commande (63 à 65) permettant de sélectionner une adresse prise parmi une première adresse de commande et une seconde adresse de commande, et un moyen d'entrelaçage (5) pour entrelacer les données d'entrée en réponse à une adresse de commande appliquée au moyen d'entrelaçage (5) et dans lequel la première adresse de commande force le moyen d'entrelaçage (5) à entrelacer des données d'entrée pour effectuer un codage convolutif et la seconde adresse de codage force le moyen d'entrelaçage (5) à entrelacer des données d'entrée selon un format permettant un codage complet dans un secteur des données d'entrée.

2. Appareil d'enregistrement de données numériques selon la revendication 1, dans lequel la première ou la seconde adresse de commande est enregistrée sur le support d'enregistrement (1).

3. Appareil d'enregistrement de données numériques selon la revendication 1 ou 2, dans lequel le secteur est constitué par 98 trames.

4. Appareil de reproduction de données numériques comprenant un moyen de reproduction et un moyen (10) de décodage des données enregistrées sur un support d'enregistrement (1) au moyen de l'appareil d'enregistrement selon la revendication 1, 2 ou 3, caractérisé en ce que le moyen de décodage (10) inclut une mémoire (71) pour stocker temporairement les données reproduites, un moyen d'adresse de commande (73 à 75) pour commander une adresse pour la mémoire (71), le moyen d'adresse de commande (73 à 75) permettant de sélectionner une adresse de commande selon que les données reproduites qui appartiennent au support d'enregistrement (1) sont des données enregistrées au moyen de la première adresse de commande ou sont des données enregistrées au moyen de la seconde adresse de commande, et un moyen de désentrelaçage (12) sensible à l'adresse de commande pour désentrelacer les données reproduites et dans lequel la première adresse de commande force le moyen de désentrelaçage (12) à désentrelacer les données d'entrée dont le codage convolutif a été effectué et la seconde adresse de commande force le moyen de désentrelaçage (12) à désentrelacer les données d'entrée dont le codage complet dans un secteur a été effectué.

5. Appareil de reproduction de données numériques selon la revendication 4, comprenant un moyen qui se voit appliquer les données reproduites pour détecter s'il s'agit de données codées, en relation avec la première adresse de commande ou avec la seconde adresse de commande, en reproduisant l'adresse de commande enregistrée sur le support d'enregistrement (1) qui indique si un codage convolutif des données a été effectué ou si un codage complet des données dans un secteur a été effectué.

6. Support d'enregistrement (1) sur lequel des données numériques ont été enregistrées, les données enregistrées se présentant sous la forme de soit des données d'entrée à codage convolutif soit des données qui sont complètement codées dans un secteur des données d'entrée, et un signal de sélection indiquant si les données enregistrées se présentent sous la forme des données à codage convolutif ou des données complètement codées dans le secteur.

7. Support d'enregistrement (1) selon la revendication 6, dans lequel le secteur est constitué par 98 trames.
